(19) **Europäisches Patentamt / European Patent Office / Office européen des brevets**

(11) **EP 3 082 443 B1**

(12) **EUROPEAN PATENT SPECIFICATION**

(45) Date of publication and mention
of the grant of the patent:
**25.03.2020 Bulletin 2020/13**

(21) Application number: **14811867.2**

(22) Date of filing: **11.12.2014**

(51) Int Cl.:
***A23G 9/34*** *(2006.01)*

(86) International application number:
**PCT/EP2014/077356**

(87) International publication number:
**WO 2015/091197 (25.06.2015 Gazette 2015/25)**

(54) **REDUCED SUGAR FROZEN CONFECTION COMPOSITION**

GEFRORENE KONFEKTZUSAMMENSETZUNG MIT REDUZIERTEM ZUCKERGEHALT

COMPOSITION DE CONFISERIE SURGELÉE À TENEUR RÉDUITE EN SUCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2013 EP 13198891**

(43) Date of publication of application:
**26.10.2016 Bulletin 2016/43**

(73) Proprietor: **Société des Produits Nestlé S.A.**
**1800 Vevey (CH)**

(72) Inventors:
• **LALLEMAND, Maud, Isabelle**
**F-60000 Beauvais (FR)**
• **JUNG, Jin-Mi**
**F-60000 Beauvais (FR)**

• **BERTINI, Stefano**
**I-43029 Parma (IT)**

(74) Representative: **Elleby, Gudrun**
**Société des Produits Nestlé S.A.**
**Avenue Nestlé 55**
**1800 Vevey (CH)**

(56) References cited:
**EP-A1- 1 650 133        EP-A1- 1 673 980**
**EP-A1- 1 982 601        EP-A2- 2 025 241**
**WO-A1-2012/130654        WO-A2-02/071856**
**AU-B2- 537 304        US-A- 4 145 454**
**US-A1- 2002 081 367        US-A1- 2004 175 462**
**US-A1- 2013 259 975**

EP 3 082 443 B1

## Description

### Field of Invention

The present invention relates to a frozen confection composition having reduced sugar content.

### Background of Invention

Frozen confections are products which are highly appreciated by consumers, both children and adults. Sweetness is a major driver for consumer preference. Another important feature is the texture of the ice confections.

With the increasing concern for health and wellness there is an increasing need for reducing calories, sugars and fats also in frozen confections. Nutritionists recommend consumers to decrease added sugar intake and favour consumption of unrefined carbohydrates, especially in children diets.

Hitherto, many frozen confections have been put on the market that claim low or no sugar by containing polyols and/or intense sweeteners. However, polyols are suspected to have laxative effects when consumed at high levels and use of intense sweeteners does not have a good image for consumers and in particular for products aimed at young children.

It is common knowledge that sugars play an essential role in the sensory properties of frozen confections. Sugars have at least a dual function in frozen confections. They provide sweetness and flavour enhancement and depress the freezing point making the frozen confection palatable.

It is generally known that low quantities of sugars (mono and di saccharides) in frozen confections will lead to a reduction in sweetness, flavour and increased hardness, with a risk of mouth "burning" sensation. For ice cream scooping of the product becomes harder with lower levels of sugar.

All sugars do not have the same sweetening power and freezing point depression factor. Usually, monosaccharides such as glucose, galactose or fructose depress the freezing point more than di-saccharides like maltose, lactose, sucrose.

US2002081367 discloses a method for producing non-dairy ready-to-use milk substitute cereal dispersions having intact beta-glucans, proteins, and natural sugars while retaining the aroma and flavour of natural cereal.

EP1982601 discloses an ice confection composition having a reduced sugar content of not exceeding 15 wt% based on the total composition which comprises a mixture of sugars containing fructose and at least 2.5 wt% of sucrose on the total composition wherein the amount of fructose is up to 80% of the total sugars.

EP1650133 discloses a squeezable assembly for shelf-stable, chilled or frozen pasty products. The added sugar is above 10.8% based on the total composition.

AU537304 and US4145454 disclose a hardened, aerated and frozen ice cream comprising freezing point depressants and being stabilized with gums e.g. locust bean gum.

EP 1 673 980 A1 provides a low-calorie frozen confection comprising fructose in combination with other saccharides as a sweetening agent. The confection contains considerable amounts of digestible complex saccharides to compensate for the relative low levels of sugars, which may not offer a nutritional benefit compared to the sugars replaced. In fact the total amount of digestible carbohydrates remains the same or is increased; therefore the energy contribution as well as the impact on glycemia would not be better than full sugar similar products. In addition, nowadays, fructose does not have a good image, because there have been some controversies regarding a possible negative impact on health of this ingredient.

Replacing sugars by longer polysaccharides, has a limited benefit for health: product energy is not much reduced, and oligosaccharides and polysaccharides will be digested as sugars in the body.

Another solution to compensate the reduction of sugar content in frozen confections is to use bulking agents such as polydextrose or inulin. However, such ingredients are known as a potential cause of digestive intolerance.

There is a need to provide frozen confections having a reduced sugar content which overcome the aforementioned drawbacks.

Therefore, it is an object of the invention to provide a frozen confection composition which has a pleasant sweet taste and texture, and which address the existing demand for products with reduced sugar content without the use of sweeteners such as intense sweeteners and of polyols.

### Summary of Invention

The invention provides a frozen confection composition with a total carbohydrates content not exceeding 29 wt. -% based on the total composition, comprising 8.4 to 10.8 wt% based on the total composition of an added sugar which consists essentially of a combination of sucrose and glucose syrup, and wherein the frozen composition has a total solids content above 17 % based on the weight of the total composition and which is free of intense sweeteners and polyols that deliver less than 4 Kcal per g, and which has a total oligosaccharides and polysaccharides content of less than 10 wt % based on the total composition.

It has been found that the frozen confection composition using sucrose and glucose syrup as frozen confection sweetener ingredients delivers sweetness surprisingly as high as some combinations expected to deliver more based on the sweetness index calculation based on literature relative sweetness coefficients.

Surprisingly, when the frozen confection composition is a water ice composition with only sucrose and glucose syrup, it is also found to be less acidic than the other compositions using glucose syrup together with some fructose, or combinations of fructose, glucose (synonym of dextrose) and sucrose. This was even more surprising since the sweetness index calculation predicted a lower perceived frozen confection sweetness.

Overall the frozen confection composition with sucrose and glucose syrup being the main contributors to the sweetness, offers a surprisingly acceptable palatability which is surprisingly better than the palatability of compositions formulated with fructose and dextrose for a calculated higher sweetness index.

The invention composition is therefore surprisingly perceived as sweet despite of lower calculated sweetness index.

This frozen confection composition is, for example, suitable for preparing a water ice, sorbet, sherbet or an ice cream.

**Detailed Description**

The present invention is defined by the claims. Unless otherwise specified, wt.-% are expressed based on the weight of the total composition. The sub-claims define preferred embodiments of the subject matter claimed.

As used herein the term "intense sweeteners" refers to high potency sweeteners. Such sweeteners are more than 10 times as sweet as sucrose (some even more than a couple of 100 times as sweet as sucrose). Non limiting examples of such "intense sweeteners" are listed as "sweeteners" in the commission regulation (EU) No 1129/2011 of 11 November 2011. It lists the following ingredients as "sweeteners": Sorbitols, Mannitol, Acesulfame K, Aspartame, Cyclamates, Isomalt, Saccharins, Sucralose, Thaumatin, Neohesperidine DC, Neotame, Salt of aspartame-acesulfame, Maltitols, Lactitol, Xylitol, Erythritol.

As used herein the term "polyol" refers to sugar alcohols delivering less than 4 kcal per g. The term "polyols" refers to hydrogenated mono- and di- and oligo- saccharides (sometimes called sugar alcohols) from carbohydrate or fiber origin. Such polyols for most named by adding suffix "-itol" to the original sugar name root. Non limiting examples of such "polyols" are listed in the commission regulation (EU) No 1129/2011 of 11 November 2011. This document lists the following ingredients as "polyols": Sorbitols, Mannitol, Isomalt, Maltitols, Lactitol, Xylitol and Erythritol. As used herein the term "polyol" does not refer to glycerol, as glycerol is a sugar alcohol that delivers at least 4 kcal per g. As used herein, the term "polyols" does not refer to glycerol. Glycerol is a sugar alcohol from fat origin.

The term ' free of intense sweetener and polyols" means that the composition - contains less than 0.6% polyol, preferably from 0 to 0.3% and has a CSIS < 50, preferably from 0 to 50.

Where CSIS is the total contribution delivered to the sweetness by intense sweeteners (CSIS). CSIS <50 means that the contribution delivered to the sweetness by intense sweeteners is less than the contribution of 0,5 weight unit of sucrose within a 100 units composition (relative sweetness of sucrose being 100).

CSIS is defined by equation:

$$CSIS = \sum_{i=0}^{m} Q_i . RS_i$$

Where

CSIS = contribution to sweetness by intense sweeteners
$Q_i$= total quantity of intense sweetener "i" per 100 weight unit of frozen confection composition
$RS_i$= Relative Sweetness value of intense sweetener "i"

Some non-limiting example of relative sweetness of intense sweeteners are presented in the table below. These have been calculated from table 17.5, page 365, from the book "Carbohydrate chemistry for food scientists" by James N. BeMiller, 2007, ISBN 978 1 891127 53 3. $RS_i$ values were converted in values relative to sucrose, which has a RS value of 100.

| Intense sweeteners | Intense sweetener approximative Relative sweetness (RSi) |
|---|---|
| Neotame | 700 000 - 1300 000 |
| Thaumatin | 200 000-250 000 |
| Alitame | ~200 000 |
| Sucralose | 60 000- 5 000 |
| Saccharine | 30 000 |
| Aspartame | 18 000-20 000 |
| Acesulfame K | 15 000-20 000 |
| Cyclamate | 3000 |

As used herein, the term "sugar" refers to digestible mono- and disaccharides having a caloric value of >3.5 kcal/g. Non-limiting examples are dextrose, sucrose, lactose, maltose and fructose.

The term "added sugars" refers to all sugars added to the ice confection by the manufacturer plus sugars naturally present in honey, syrups and fruit juices added for sweetening purpose only ie without delivering the fruit taste to the product. It excludes sugars naturally present in the milk ingredients (such as lactose) or coming from the fruit.

The term "total sugars" as used herein corresponds to the total amount of mono and di saccharides introduced by every raw materials entering the composition of the frozen confection composition.

As used herein the term "total carbohydrates" refers to digestible carbohydrates having a caloric value above 3.5 kcal per g.

As used herein, the term "added fructose" refers to fructose delivered by raw materials introduced in the frozen confection composition for sweetening purpose, for example: Fructose enclosed in glucose syrup composition, fructose from fruit juices used for pure sweetening purpose, fructose resulting from fructose addition to any raw material, fructose not naturally occurring in fruit raw material.

Whereas the term "total fructose" as used herein corresponds to the total amount of fructose introduced by every raw materials entering the composition of the frozen confection composition.

Therefore "total fructose" encloses both "added fructose" and fructose naturally occurring in ingredients used for taste or fruit delivery purpose, for example: Fructose delivered through a fruit puree, which puree aiming at delivering a fruit content and taste to the frozen confection composition. Non-limiting examples being strawberry puree, peach puree, pear puree, and melon puree and fructose delivered through fruit pieces.

The term "oligosaccharides" means carbohydrates having a degree of polymerization between 3 and 9.

The term "polysaccharides" means carbohydrates having a degree of polymerization of more than 10.

As used herein, the term "multifunctional flavours" refers to flavours that in addition to flavours deliver a function to the product such as texture.

Examples of additional functions of multifunctional flavours can be enhancement of taste elements or delivering texture.

In the application of this invention multifunctional flavours could be included to deliver both flavour and an additional sweetness to the product for consumers who like sweeter products. Multifunctional flavours could also be included to deliver mouthfeel if this is desired.

Usage of natural multifunctional flavours is preferred versus artificial multifunctional flavours.

As used herein, the term multifunctional flavour excludes flavours containing additives as flavour compound.

Multifunctional flavour for example should not contain intense sweeteners or intense sweeteners derivatives (not artificial nor natural). This would be misleading as this would mean hiding usage of regulated additives.

As used herein, "total energy content" is a calculation of nutritional energy of nutrients for humans. It represents the sum of the energy delivered by the nutritional components of the products it is defined by the equation :

$$E = \sum \varepsilon_j \cdot C_j$$

Where $\varepsilon$ is the energy factor of each nutritional component, j, of the frozen confection, expressed in Kcal/g. and Cj, is the concentration of the same nutritional component, j in 100g of the frozen confection composition.

Non limiting examples of energy factors $\varepsilon$ are described in the table below:

| Nutritional component (j) | Energy factor (εj) |
|---|---|
| Protein | 4 |
| Sugars | 4 |
| Digestible carbohydrates | 4 |
| Pea fiber | 2 |
| Fat | 9 |

As used herein, a sweetening component refers to a given sugar that delivers a relative sweetness RS.

As used herein, the relative sweetness RS expresses the sweetness of a given sugar or intense sweetener in relation to the sweetening power of sucrose. Values for RS are readily available in technical literature.

Non limitative examples of RS values are:

| Sweetening component k | Relative Sweetness (RSk) |
|---|---|
| Fructose | 173 |
| Sucrose | 100 |
| Maltose | 32 |
| Dextrose | 74 |
| Lactose | 16 |

As used herein, the Sweetness Index (SI) of the frozen confection composition is defined by equation: For a composition enclosing n sweetening components.

Qk= total quantity of sweetening component "k" per 100 weight unit of frozen confection composition

$$SI = \sum_{k=0}^{n} Q_k . RS_k$$

RSk= Relative Sweetness value of sweetening component "k"

The frozen confection composition of the present invention has a reduced added sugar content of 8.4 to 10.8 wt. -% based on the total weight of the composition, which added sugar comprises a combination of sucrose and glucose syrup. This provides a healthy frozen confection.

The frozen confection composition of the present invention is free of intense sweetener and polyols that deliver less than 4 Kcal per g.

For a complete understanding of the present invention and the advantages thereof, reference is made to the following detailed description.

It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from different aspects and embodiments of the invention.

The present invention relates to a frozen confection composition with a total carbohydrates content not exceeding 29 wt. -% based on the total composition, comprising an added sugar content from 8.4 to 10.8 wt% based on the total composition, which consists essentially of a combination of sucrose and glucose syrup, and wherein the frozen composition has a total solids content above 17 % based on the weight of the total composition and which is free of intense sweeteners and polyols that deliver less than 4 Kcal per g, and which has a total oligosaccharides and polysaccharides content of less than 10 wt% based on the total composition.

According to any embodiment of the invention, surprisingly and contrary to the sweetness index calculation predictions, the frozen confection composition according to the invention offers a surprisingly acceptable and superior palatability compared to compositions using glucose syrup together with fructose, or combinations of fructose, dextrose and sucrose.

The added sugar content is comprised from 8.4 to 10.8, preferably from 8.4 to 10.6 wt. -%. A product made according to this embodiment has a good balance of sweetness and a desirable texture.

Preferably, the total carbohydrates content is comprised from 16.4 to 19, preferably from 16.7 to 18 wt. -%.

The added sugars are introduced through the use of a combination of sucrose and glucose syrup.

The glucose syrup can be any type of glucose syrup such as glucose syrup DE 40 or below. Example of sugar content in glucose syrup is presented in the table below:

|  | % saccharides | | |
|---|---|---|---|
|  | Mono- | Di - | Higher |
| 27 DE glucose syrup | 9 | 9 | 82 |
| 36 DE glucose syrup | 14 | 12 | 74 |

Values based on "Carbohydrate chemistry for food scientists" by James N. BeMiller, 2007 ISBN 978 1 891127 53 3 page 202, table 6.2

The frozen confection composition can further comprise glycerol in an amount of from 0.5 to 2, preferably from 0.5 to 1 wt. -%. Such low level addition of glycerol can be done when slight texture softening is required. The amount used depends on the texture required.

The frozen confection composition can further comprise a multifunctional flavour in an amount of from 0.05 to 4 wt. -%.

The frozen confection composition has a total solids content above 17, preferably above 18, more preferably above 19 wt. -% based on the total composition.

The frozen confection composition has a total oligosaccharides and polysaccharides content of less than 10 wt. -%. This provides a good nutritional profile.

The frozen confection composition of the present invention may further comprise ingredients and/or additives which are common in frozen confections. Said ingredients and/or additives are for example: proteins, emulsifiers, stabilizers, acidifying agents, flavourings, colourings and mixtures thereof.

Suitable but non-limiting examples of emulsifiers to be used are monoglycerides, diglycerides, polysorbate, or polyol esters of fatty acids such as propylene glycol monoester of fatty acids and mixtures thereof. Stabilizers which can be used in the present invention are locust bean gum, guar gum, alginates, cellulose, xanthan gum, carboxymethyl cellulose, microcrystalline cellulose, alginates, carrageenans, pectins and mixtures therof. The choice of amounts thereof is within the skill of a skilled person in the art.

If the frozen confection composition of the present invention is intended to exhibit a particular fruity character, it may also comprise fruit puree, fruit pieces or juices of any suitable fruit.

In the case of a water ice, sorbet or sherbet composition, if additional ingredients such as fruit juice or fruit puree are added, the total sugar content of the frozen confection composition should not exceed 10.8 wt. -%. The total sugar content is comprised from 8.4 to 10.8, more preferably from 8.4 to 10.6 wt. -%.

In a further embodiment, the frozen confection composition can be a water ice, a sorbet or a sherbet composition. The water ice, sorbet or sherbet composition has a total energy content of below 85 Kcal, preferably below 80 Kcal per 100g of the composition. The water ice, sorbet or sherbet composition may have a pH below 4.

In another preferred embodiment, the frozen confection composition is an ice cream. For ice cream composition it is preferred that the composition has a total energy content of below 170 Kcal per 100g of the composition. Preferably, the ice cream composition may have a fat content below 12 wt. -%, preferably below 9 wt. -%, even more preferably below 6 wt. %, in order to deliver a composition with an acceptable nutritional profile.

The frozen confection can have an overrun in the range of 0 to 200 %, when formulated as a water ice or sorbet. An ice cream product usually has an overrun in the range of 20 to 250%. The frozen confections according to the invention can be manufactured following standard processes. Usually, the ingredients are mixed in an appropriate mixer and subsequently pasteurized and optionally homogenized or vice versa. The homogenized/pasteurized mixture is then optionally aged. The mix is then aerated until an appropriate overrun and frozen to a temperature of around -0 to -20 °C.

The frozen confection produced may then be hardened to a temperature between -20°C to -40 °C for several hours. The ice confections are then stored at an appropriate freezing temperature of around 20 to -35°C.

Once the ingredients are mixed, the frozen confection composition can be aseptically packaged after thermal treatment and stored at ambient temperature to be frozen before consumption.

The present invention is now further illustrated by means of the examples.

Examples

The examples wherein the ingredients are not falling in the claimed ranges are not part of the invention and are provided below only for comparative reasons.

Example 1

The following lemon flavored frozen confection compositions were prepared:

| RECIPE | 1 | 2 | 3 | 4 |
|---|---|---|---|---|
| Glucose syrup DE 20-23 (powder) | 90.000 | 90.00 | 90.00 | 89.00 |
| Sugar (powder) | 31.000 | 80.00 | 55.50 | 0.00 |
| Fructose (powder) | 28.000 | 0.00 | 14.00 | 44.00 |
| Glucose (synonym Dextrose) powder | 23.000 | 0.00 | 11.50 | 37.00 |
| Lemon juice concentrate | 16.000 | 16.00 | 16.00 | 16.00 |
| Citric acid INS330 | 1.830 | 1.83 | 1.83 | 1.83 |
| Flavor | Adapted dosage (depending on flavor used and flavor delivery targeted) | | | |
| Stabilisers (eg. Guar gum, Locust bean gum, CMC, carrageenans in combination or alone) | recommended dosage (typically 1.5 to 2.7) | | | |
| Colors | Adapted dosage, (depending on type of color, color concentration of raw material and desired color.) | | | |
| Water | Q.S. 1000 Kg | | | |
| TOTAL INGREDIENTS | 1000 Kg | 1000 Kg | 1000 Kg | 1000 Kg |

Ingredient quantities are expressed in Kg per 1000Kg of frozen confection composition.

The components and SI for this example the compositions are the following

| ANALYTICAL DATA | 1 | 2 | 3 | 4 |
|---|---|---|---|---|
| Added sugar (g/100g) | 8.8 | 8.9 | 8.8 | 8.6 |
| Total sugar (g/100g) | 9.0 | 9.1 | 9.0 | 8.8 |
| Added fructose (g/100g) | 2.8 | 0.0 | 1.4 | 4.4 |
| Total Fructose (g/100g) | 2.9 | 0.1 | 1.5 | 4.5 |
| total solids (g/100g) | 18.0 | 18.0 | 18.0 | 17.6 |
| Total carbohydrates (g/100g) | 16.7 | 16.8 | 16.8 | 16.4 |
| Oligo polisaccharides (g/100g) | 7.7 | 7.7 | 7.7 | 7.6 |
| Dextrose | 2.4 | 0.3 | 1.4 | 3.7 |
| Fructose | 2.9 | 0.1 | 1.5 | 4.5 |
| Sucrose | 3.1 | 8.0 | 5.6 | 0.0 |
| Maltose | 0.6 | 0.6 | 0.6 | 0.6 |
| Lactose | 0.0 | 0.0 | 0.0 | 0.0 |
|  |  |  |  |  |
| Sweetness index (SI) | 1009 | 861 | 935 | 1069 |

The 4 frozen confections of the examples have different sweetness indexes SI.

Based on SI calculation that is a standard type of calculation for persons skilled in the art of frozen confection formulation, the recipes are expected to have different sweetness levels. Based on SI calculation, 2 ($SI_2$=861) is expected to be less sweet than 3 ($SI_3$=935) and even less sweet than 1 ($SI_1$=1009). 2 ($SI_2$=861 is expected to have a lower sweetness than 4 ($SI_4$= 1069), based on calculated SI.

The compositions were frozen and stored at -30°C. The composition were re-heated between-16°C and -18°C for a tasting session gathering 5 persons skilled in the art of frozen confection and used to taste frozen confections.

Samples were presented coded to the tasters who did not know what was the composition behind each code. Perceived sweetness and perceived acidity were rated by the taster using the discrete scales described in the table below. The table below presents the conversion of the scores in numeric value in order to be able to calculate average. When one taster placed its scoring mark between 2 boxes, the score was taken the average of the 2 integer values given to the considered boxes. For example, if a taster crosses between box "Not sweet at all" and "moderately sweet", the score conversion is (0+1)/2 = 0,5.

| Perceived sweetness scale | Not sweet at all | Slightly sweet | Moderately sweet | Highly sweet | Very intensively sweet | Agressively sweet |
|---|---|---|---|---|---|---|
| corresponding perceived sweetness score | 0 | 1 | 2 | 3 | 4 | 5 |
| Perceived acidity scale | Not acidic | Very slightly acidic | Slightly acidic | Clearly acidic | Strongly acidic | Very strongly acidic |
| corresponding perceived acidity score | 0 | 1 | 2 | 3 | 4 | 5 |

The scores obtained by the example frozen confections are detailed in the table hereafter, together with copies of the SI index calculated:

| SI and perceived taste | 1 | 2 | 3 | 4 |
|---|---|---|---|---|
| Sweetness index (SI) | 1009 | 861 | 935 | 1069 |
| average sweetness perceived | 1.9 | 1.9 | 2 | 1.2 |
| average Acidity perceived | 3.4 | 2.5 | 2.8 | 3.3 |

Surprisingly 2 has similar perceived sweetness level as 4, 3, and 1. Even more surprisingly, 2 is clearly less acidic than 1 and 4 and might tend to be less acidic than 3. One hypothesis to explain the gap between recipes 1,2,3 and 4 that is really less sweet than all the others could be the lower quantity of solids. People with state of the art knowledge expect low level of total solids to result in increased coldness. Increased coldness could be an hypothesis for the lowest sweetness perceived. Though SI calculation takes into account the quantities of all sweetening components in a given quantity of frozen confection composition.

Frozen confections 1, 2 and 3 have the same total solids. A person skilled in the art could expect similar coldness of these 3 frozen confections, and therefore an unbiased comparison of the taste expression of the recipe components. Nevertheless, recipe 2 with the least SI has similar perceived sweetness as 1 and 3. Hence, surprisingly, frozen confection 2 is perceived as less acidic. While all 4 confections contained the same quantities of lemon juice and citric acid.

With this combination of palatable perceived sweetness together with reduced acidity, frozen confectionary composition 2 was selected as the most palatable one by the tasters.

The initial intention of formulation 2 was for person skilled in the art to demonstrate to persons not skilled in the art that formulation 2 cannot be palatable. Very surprisingly the exact contrary conclusion was reached by the evidence of the tasting sessions.

In another tasting session with 6 tasters, the same conclusion was reached (rating recipes 1, 2 and 3). The scores are presented below. The overall sweetness scores are lower because of the halo effect of a fourth samples that was presented into the same degustation and was very sweet. However this fourth sample is not relevant in the scope of this invention.

| SI and perceived taste | 1 | 2 | 3 |
|---|---|---|---|
| Sweetness index (SI) | 1009 | 861 | 935 |
| average sweetness perceived | 1.4 | 1.4 | 1.6 |
| average Acidity perceived | 3.0 | 2.7 | 3.3 |

Again, 2 is as sweet as 1 and 3. And 2 is the least acidic of the 3 samples. The similar result on the 2 tasting session convinced the persons with state in the art knowledge that a new feature was discovered: this proved it is not an artefact. In frozen confections with less sugars than in standard ice confections fructose may not be a good candidate for good palatability.

Recipes 1, 3 and 4 had higher SI thanks to their fructose content. Persons with state of the art knowledge expect a sweetness enhancement or boosting effect from the usage of fructose vs. sucrose in classical frozen confection compositions (Eg. with sugars egal or above to 20 g per 100g of frozen confection composition.)

Here the SI calculation gave the same type of prediction, but proved to be not applicable in the same way. With low levels of sugars (total sugars below 10 g per 100g of frozen confection), sucrose seems more beneficial to palatability than fructose. Despite RS of sucrose is below RS of fructose.

Example 2

The following frozen confection compositions were prepared :

| | 5 | 6 |
|---|---|---|
| Water | 51 | 51 |
| Glucose Syrup 20-23DE powder | 11 | 11 |
| Fructose powder | | 4 |
| Milk Skimmed Powder | 10 | 10 |

| | 5 | 6 |
|---|---|---|
| Sugar Powder | 8 | 4 |
| Milk Cream 30% Fat UHT semi-thick | 20 | 20 |
| *TOTAL* | *100* | *100* |
| | | |
| Energy | 168.0 | 168.0 |
| Total sugars | 14.9 | 14.9 |
| Added sugars | 9.0 | 9.0 |
| carbohydrates | 24.3 | 24.3 |
| Added fructose | 0.0 | 4.0 |
| fructose | 0.0 | 4.0 |
| FAT | 6.1 | 6.1 |
| SFA | 3.7 | 3.7 |
| Sweetness index | 939 | 1231 |

The milk cream used in compositions 5 and 6 of example is UHT semi thick cream, commercialized in sealed plastic bottles at ambient temperature. This semi thick cream contains modified starch, emulsifiers E471 and E472a, and some carrageenans. The fat content of this cream is 30g fat per 100g cream.

The ingredients of the composition were weighed manually in a sauce pan and whipped manually. This mix was slightly heated on an electric appliance (less than 3 minutes), up to a tepid temperature, in order to better disperse the milk powder.

The composition was then quiescently cooled down to negative temperature.

Four persons tasted and compared the preparation 5 and 6 at negative temperature. Surprisingly, the 4 tasters found the overall palability of the composition 5 more acceptable than composition 6.

**Claims**

1. A frozen composition with a total carbohydrates content not exceeding 29 wt% based on the total composition, comprising 8.4 to 10.8 wt% based on the total composition of an added sugar which consists essentially of a combination of sucrose and glucose syrup, and wherein the frozen composition has a total solids content above 17 % based on the weight of the total composition and which is free of intense sweeteners and polyols that deliver less than 4 Kcal per g, and which has a total oligosaccharides and polysaccharides content of less than 10 wt% based on the total composition.

2. A frozen confection composition according to claim 1 wherein the added sugar content is from 8.4 to 10.6 wt. -% based on the total composition.

3. A frozen confection composition according to any of the claims 1 to 2, wherein the total carbohydrates content is comprised from 16.4 to 19, preferably from 16.7 to 18 wt. -% based on the total composition.

4. A frozen confection composition according to any of the preceding claims further comprising glycerol in an amount of from 0.5 to 2, preferably from 0.5 to 1 wt. -% based on the total composition.

5. A frozen confection composition according to any of the preceding claims further comprising a multifunctional flavour is in an amount of from 0.05 to 4 wt. -% based on the total composition.

6. A frozen confection composition according to any one of the preceding claims which is a water ice, a sorbet or a sherbet composition.

7. A frozen confection composition according to any one of the proceeding claims which is an ice cream composition.

**Patentansprüche**

1. Gefrorene Zusammensetzung mit einem Gesamtkohlenhydratgehalt von nicht mehr als 29 Gew.-%, bezogen auf das Gesamtgewicht der Zusammensetzung, umfassend zu 8,4 bis 10,8 Gew.-%, bezogen auf das Gesamtgewicht der Zusammensetzung, einen zugesetzten Zucker, der im Wesentlichen aus einer Kombination aus Saccharose- und Glucosesirup besteht, und wobei die gefrorene Zusammensetzung einen Gesamtfeststoffgehalt von mehr als 17 %, bezogen auf das Gewicht der Gesamtzusammensetzung, aufweist und frei von starken Süßungsmitteln und Polyolen ist, die weniger als 4 kcal pro Gramm zuführen, und die einen Gesamt oligosaccharid- und -polysaccharidgehalt von weniger als 10 Gew.-%, bezogen auf die Gesamt zusammensetzung, aufweist.

2. Gefrorene Süßwarenzusammensetzung nach Anspruch 1, wobei der zugesetzte Zuckergehalt von 8,4 bis 10,6 Gew.-%, bezogen auf die Gesamtzusammensetzung, beträgt.

3. Gefrorene Süßwarenzusammensetzung nach einem der Ansprüche 1 bis 2, wobei der Gesamtkohlenhydratgehalt von 16,4 bis 19, vorzugsweise von 16,7 bis 18 Gew.-%, bezogen auf die Gesamtzusammensetzung, beträgt.

4. Gefrorene Süßwarenzusammensetzung nach einem der vorstehenden Ansprüche, die ferner Glycerin in einer Menge von 0,5 bis 2, vorzugsweise von 0,5 bis 1 Gew.-%, bezogen auf die Gesamtzusammensetzung, umfasst.

5. Gefrorene Süßwarenzusammensetzung nach einem der vorstehenden Ansprüche, die ferner einen multifunktionellen Geschmacksstoff in einer Menge von 0,05 bis 4 Gew.-%, bezogen auf die Gesamtzusammensetzung, umfasst.

6. Gefrorene Süßwarenzusammensetzung nach einem der vorstehenden Ansprüche, die eine Wassereis-, eine Sorbet- oder eine Fruchteis-Zusammensetzung ist.

7. Gefrorene Süßwarenzusammensetzung nach einem der vorstehenden Ansprüche, die eine Eiscreme-Zusammensetzung ist.

**Revendications**

1. Composition congelée avec une teneur totale en glucides n'excédant pas 29 % en poids par rapport à la composition totale, comprenant 8,4 à 10,8 % en poids par rapport à la composition totale, d'un sucre ajouté qui est essentiellement constitué d'une combinaison de sirop de saccharose et de glucose, et dans laquelle la composition congelée a une teneur totale en solides supérieure à 17 % par rapport au poids de la composition totale et qui est exempte d'édulcorants puissants et de polyalcools qui délivrent moins de 4 kcal par g, et qui a une teneur totale en oligosaccharides et en polysaccharides inférieure à 10 % en poids par rapport à la composition totale.

2. Composition de confiserie congelée selon la revendication 1, dans laquelle la teneur en sucre ajouté va de 8,4 à 10,6 % en poids par rapport à la composition totale.

3. Composition de confiserie congelée selon l'une quelconque des revendications 1 à 2, dans laquelle la teneur totale en glucides est comprise entre 16,4 et 19, de préférence de 16,7 à 18 % en poids par rapport à la composition totale.

4. Composition de confiserie congelée selon l'une quelconque des revendications précédentes, comprenant en outre du glycérol en une quantité de 0,5 à 2, de préférence de 0,5 à 1 % en poids par rapport à la composition totale.

5. Composition de confiserie congelée selon l'une quelconque des revendications précédentes, comprenant en outre un arôme multifonctionnel en une quantité allant de 0,05 à 4 % en poids par rapport à la composition totale.

6. Composition de confiserie congelée selon l'une quelconque des revendications précédentes, qui est une composition de glace à l'eau, de sorbet ou de sorbet laitier.

7. Composition de confiserie congelée selon l'une quelconque des revendications précédentes, qui est une composition de crème glacée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002081367 A
- EP 1982601 A
- EP 1650133 A
- AU 537304
- US 4145454 A
- EP 1673980 A1

**Non-patent literature cited in the description**

- **JAMES N. BEMILLER.** *Carbohydrate chemistry for food scientists,* 2007, ISBN 978 1 891127 53 3, 365